# FASCICULE DE BREVET EUROPEEN

(11) **EP 0 416 966 B1**
(45) Date de publication et mention de la délivrance du brevet: **25.10.1995**
(21) Numéro de dépôt: 90402193.8
(22) Date de dépôt: 31.07.1990
(51) Int. Cl.: B60T 13/569

(54) **Servomoteur pneumatique**
Pneumatischer Servomotor
Pneumatic servomotor

(30) Priorité: 05.09.1989 FR 8911565
(43) Date de publication de la demande: 13.03.1991
(73) Titulaire: ALLIEDSIGNAL EUROPE SERVICES TECHNIQUES, 93700 Drancy (FR)
(72) Inventeur: Gautier, Jean-Pierre, F-93700 Drancy (FR)
(74) Mandataire: Bentz, Jean-Paul

(56) Documents cités:
- DE-A- 2 751 430
- DE-B- 1 949 364
- GB-A- 2 116 632
- US-A- 3 321 915
- US-A- 4 070 946

## Description

La présente invention concerne un servomoteur pneumatique du type à dépression comprenant principalement un boîtier divisé en deux chambres par une structure de paroi, constituée d'un plateau sensiblement radial et d'une membrane souple fixée par son bord périphérique extérieur audit boîtier, et formant un pli dans l'espace situé entre ledit plateau et ledit boîtier, une structure de moyeu abritant un moyen de valve de distribution étant associé à un organe de commande et à un organe commandé, chacun par une liaison à rotule, ledit plateau comportant à son bord extérieur un prolongement coopérant de façon non-étanche avec la paroi interne du dit boîtier.

Un tel servomoteur trouve son application notamment pour l'assistance au freinage des véhicules automobiles. Dans cette application, le fonctionnement d'un tel servomoteur est bien connu et peut donc être sommairement expliqué de la sorte : en phase de repos, les deux chambres sont connectées à une source de dépression ; en phase de freinage, de l'air à pression atmosphérique est admis dans l'une des chambres; la différence des pressions entre les deux chambres entraîne alors le déplacement de la paroi mobile et par suite assiste le freinage.

FR-B-2 334 862 décrit un servomoteur pneumatique dans lequel une membrane est supportée par un plateau rigide permettant son extension suivant la direction de déplacement de la paroi mobile constituée de ce plateau et de cette membrane ; lors de ce déplacement, cette paroi mobile n'est pas parfaitement guidée dans le boitier, et, du fait des liaisons à rotule, le plateau peut se placer de travers et endommager la membrane.

Le but de la présente invention est d'obvier à cet inconvénient en proposant un système qui autorise le guidage de la paroi mobile dans le boîtier afin de ne pas détériorer la membrane.

On connaît de US-A-4 070 946 un vérin à air comprimé dans lequel le piston creux comporte une jupe de guidage coopérant avec la paroi interne du boîtier. En effet, l'organe commandé n'est pas solidaire du piston creux qui doit alors être convenablement centré.

Toutefois, ce piston creux de forme allongée n'est pas soumis à des forces tendant à le placer de travers puisqu'il n'est pas disposé entre deux liaisons à rotule et ne reçoit aucun organe de commande susceptible de lui appliquer une force oblique.

On connaît de US-A-3 321 915 un servomoteur pneumatique correspondant au préambule de la revendication principale, dans lequel le boîtier est divisé en deux chambres par une structure de paroi solidaire du tablier du véhicule, le boîtier, solidaire du maître-cylindre et de son réservoir d'alimentation, étant mobile autour de la structure de paroi. Le prolongement du plateau sert alors de support au boîtier mobile, une broche de guidage du boîtier étant prévue à l'extérieur du boîtier.

Par atteindre le but de l'invention, selon une caractéristique de celle-ci, le plateau est centralement solidarisé à la structure de moyeu, la structure de paroi est mobile, et le prolongement assure un guidage axial de la paroi mobile dans le boîtier.

Ce prolongement est constitué soit par une jupe cylindrique ajourée soit par une pluralité de doigts.

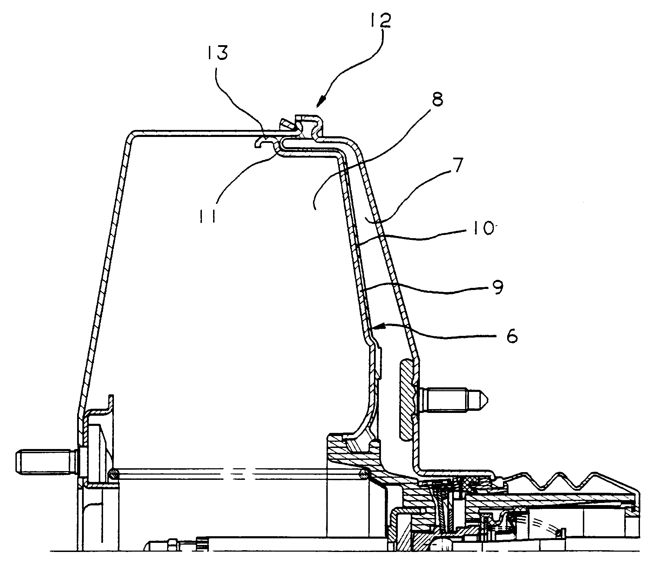

L'invention sera mieux comprise et d'autres buts, avantages et caractéristiques apparaîtront plus clairement à la lecture de la description qui suit d'un mode préféré de réalisation donné à titre non limitatif faite en relation avec le dessin annexé sur lequel :
- La Figure unique est une vue en demi-coupe partielle d'un servomoteur pneumatique d'assistance au freinage selon l'invention.

Sur la Figure unique, on a representé en demi-coupe un servomoteur pneumatique d'assistance au freinage dont les éléments constitutifs principaux et le fonctionnement sont supposés connus de l'homme du métier : une structure de paroi mobile 6 formée d'un ensemble d'un plateau 9 métallique sensiblement disposé dans un plan radial et d'une membrane 10 souple sépare un boitier 12 en deux chambres 7,8 à l'intérieur desquelles des pressions différentes sont établies lors d'une action de freinage afin de provoquer le déplacement de la paroi mobile 6 et de ce fait créer l'assistance au freinage.

De façon connue, le plateau 9 est solidaire d'un moyeu 2, généralement en matériau plastique, qui est associé à un organe de commande 3 par une liaison à rotule. Cet organe de commande 3 détermine en outre l'état d'un moyen de valve de distribution 5 permettant d'obtenir des pressions différentes dans les chambres 7 et 8. Le moyeu est également solidaire d'une tige de poussée 4 comportant une extrémité rotulée s'appuyant sur le piston d'entrée d'un maître-cylindre (non représenté).

La membrane 10 souple est fixée par son bord périphérique intérieur au plateau métallique 9 et par son bord périphérique extérieur au boitier 12, et présente un pli 11 lui permettant de se dérouler lors du mouvement du plateau 9.

Selon l'invention, le plateau 9 comporte à son bord extérieur un prolongement 13 coopérant avec la paroi interne du boitier 12 pour créer une zone de guidage de la paroi mobile.

Lors d'une action de freinage, la paroi mobile 9-10 se déplace et la membrane 10 se déforme principalement selon la direction de déplacement du plateau 9 ; le prolongement 13 va permettre de guider la paroi mobile 9-10 dans le boîtier 12 et par suite d'éviter toute détérioration de la membrane.

Dans le mode de réalisation illustré sur la Figure, le prolongement et le plateau forment une seule et même pièce. Néanmoins, le prolongement 13 pourrait être une pièce rapportée.

Le prolongement 13 peut être constitué soit par une jupe cylindrique ajourée soit par une pluralité de doigts. En effet, il est impératif que, lors du fonctionnement du servomoteur, il ne se crée pas une troisième chambre entre le prolongement 13 et le pli 11 de la membrane 10, dans laquelle la pression serait différente de celle régnant dans la chambre 8. Dans un tel cas, le pli 11 de la membrane 10 ne reprendrait pas naturellement au repos la position représentée et un claquement se ferait ressentir lors de la mise sous pression de la chambre 7, tendant à déchirer la membrane 10.

De plus, pour interdire toute rotation du plateau, il est avantageux, dans le cas où le prolongement 13 est constitué par une pluralité de doigts, de pratiquer au moins une rainure dans la paroi interne du boitier 12, rainure dans laquelle s'engagera l'un des doigts du prolongement 13.

## Revendications

1. Servomoteur pneumatique du type à dépression comprenant principalement un boîtier (12) divisé en deux chambres (7, 8) par une structure de paroi (6), constituée d'un plateau sensiblement radial (9) et d'une membrane souple (10) fixée par son bord périphérique extérieur audit boîtier (12), et formant un pli (11) dans l'espace situé entre ledit plateau (9) et ledit boîtier (12), une structure de moyeu abritant un moyen de valve de distribution étant associé à un organe de commande et à un organe commandé, chacun par une liaison à rotule, ledit plateau (9) comportant à son bord extérieur un prolongement (13) coopérant de façon non-étanche avec la paroi interne du dit boîtier (12), caractérisé en ce que le plateau (9) est centralement solidarisé à la structure de moyeu, en ce que le structure de paroi (6) est mobile, et en ce que le prolongement (13) assure un guidage axial de la paroi mobile (6) dans le boîtier (12).

2. Servomoteur pneumatique selon la revendication 1, caractérisé en ce que ledit prolongement (13) est constitué par une jupe cylindrique ajourée.

3. Servomoteur pneumatique selon la revendication 1, caractérisé en ce que ledit prolongement (13) est constitué par une pluralité de doigts.

4. Servomoteur pneumatique selon la revendication 3, caractérisé en ce qu'au moins un doigt s'engage dans une rainure pratiquée à cet effet dans ladite paroi interne pour interdire toute rotation dudit plateau.

5. Servomoteur pneumatique selon l'une quelconque des revendications précédentes, caractérisé en ce que ledit prolongement (13) et ledit plateau (9) forment une seule et même pièce.

6. Servomoteur pneumatique selon l'une quelconque des revendications 1 à 4, caractérisé en ce que ledit prolongement (13) est une pièce rapportée.

## Claims

1. Pneumatic booster of the vacuum type comprising mainly a housing (12) divided into two chambers (7, 8) by a wall structure (6), constructed of a substantially radial plate (9) and a flexible diaphragm (10) secured by its outer peripheral edge to said housing (12), and forming a fold (11) in the space between said plate (9) and said housing (12), a hub structure housing a distribution valve device being linked to a control member and to a controlled member, each by a swivel connection, said plate (9) having at its outer edge an extension (13) cooperating in a non-leaktight manner with the internal wall of said housing (12) characterized in that the plate (9) is centrally integral with the hub structure, in that the wall structure (6) is movable, and in that the extension (13) ensures axial guidance of the movable wall (6) in the housing (12).

2. Pneumatic booster according to Claim 1, characterized in that said extension (13) is constructed of a perforated cylindrical skirt.

3. Pneumatic booster according to Claim 1, characterized in that said extension (13) is constructed of a plurality of fingers.

4. Pneumatic booster according to Claim 3, characterized in that at least one finger engages in a groove made for this purpose in said internal wall to prevent any rotation of the said plate.

5. Pneumatic booster according to any one of the preceding claims, characterized in that said extension (13) and said plate (9) form one and the same part.

6. Pneumatic booster according to any one of Claims 1 to 4, characterized in that said extension (13) is a separate part.

## Patentansprüche

1. Pneumatischer Unterdruck-Servomotor, der im wesentlichen ein Gehäuse (12) umfaßt, das in Zwei Kammern (7, 8) durch eine Wand (6) unterteilt ist, die gebildet ist durch eine im wesentlichen radiale Platte (9) und eine nachgiebige Membran (10), die mittels ihres Außenumfangsrandes an dem Gehäuse (12) befestigt ist und in dem Raum zwischen der Platte (9) und dem Gehäuse (12) eine Falte (11) bildet, wobei eine Nabe, welche ein Verteil-Ventilmittel schützt, einem Steuerorgan und einem gesteuerten Organ jeweils über eine Kugelgelenk-Verbindung zugeordnet ist, wobei die Platte (9) an ihrem Außenrand eine Verlängerung (13) aufweist, die in nichtdichter Weise mit der Innenwand des Gehäuses (12) zusammenwirkt, dadurch gekennzeichnet, daß die Platte (9) in einem Mittelbereich mit der Nabe verbunden ist, daß die Wand (6) bewegbar ist und daß die Verlängerung (13) eine axiale Führung der bewegbaren Wand (6) in dem Gehäuse (12) gewährleistet.

2. Pneumatischer Servomotor nach Anspruch 1, dadurch gekennzeichnet, daß die Verlängerung (13) durch eine durchbrochene zylindrische Schürze gebildet ist.

3. Pneumatischer Servomotor nach Anspruch 1, dadurch gekennzeichnet, daß die Verlängerung (13) durch mehrere Finger gebildet ist.

4. Pneumatischer Servomotor nach Anspruch 3, dadurch gekennzeichnet, daß wenigstens ein Finger in eine Nut eingreift, die zu diesem Zweck in der Innenwand ausgebildet ist, um jegliche Drehung der Platte zu verhindern.

5. Pneumatischer Servomotor nach einem der vorhergehenden Ansprüche, dadurch gekennzeichnet, daß die Verlängerung (13) und die Platte (9) ein einziges Teil bilden.

6. Pneumatischer Servomotor nach einem der Ansprüche 1 bis 4, dadurch gekennzeichnet, daß die Verlängerung (13) ein angesetztes Teil ist.
